# EUROPEAN PATENT APPLICATION

(11) **EP 4 564 111 A1**
(43) Date of publication of application: **04.06.2025**
(21) Application number: 23844882.3
(22) Date of filing: 31.03.2023
(51) Int. Cl.: G05B 23/00, B61L 5/10

(54) **TRAIN CONTROL METHOD, STORAGE MEDIUM, ON-BOARD CONTROLLER, AND TRAIN**

(30) Priority: 28.07.2022 CN 202210901759
(71) Applicant: BYD Company Limited, Shenzhen, Guangdong 518118 (CN)
(72) Inventor: CHEN, Meizhu, Shenzhen, Guangdong 518118 (CN); ZHUO, Kaikuo, Shenzhen, Guangdong 518118 (CN); CHEN, Chujun, Shenzhen, Guangdong 518118 (CN)
(74) Representative: Mathys & Squire
(86) International application number: PCT/CN2023/085751
(87) International publication number: WO 2024/021665

(57) **Abstract**

Provided are a train control method, a storage medium, an on-board controller (400), and a train. The method comprises: when there is a communication failure in a target train, determining a target failure type of the communication failure in the target train; determining a target control strategy for the target train according to the target failure type and a preset correlation between a failure type and a control policy; and according to the target control strategy, controlling the target train to run.

## Description

### CROSS-REFERENCE TO RELATED APPLICATIONS

The present disclosure claims priority to and benefits of Chinese Patent Application No. 202210901759.1, entitled "TRAIN CONTROL METHOD, STORAGE MEDIUM, ON-BOARD CONTROLLER, AND TRAIN" and filed on July 28, 2022, which is incorporated herein by reference in its entirety.

### FIELD

The present disclosure relates to the field of rail transit technologies, and more specifically, to a train control method, a storage medium, a vehicle on-board controller, and a train.

### BACKGROUND

Currently, a train autonomous circumambulate system (Train Autonomous Circumambulate System, TACS for short) based on vehicle-to-vehicle communication relies on communication between devices to obtain line information or front train information in a manner of vehicle-to-ground interlocking and vehicle-to-vehicle coordination, thereby ensuring safe and efficient train running. However, when a train communication device fails and a train is consequently degraded, a running path of the degraded train is usually planned manually and remotely, resulting in low efficiency. In addition, when the train is manually and remotely controlled, the train's actual running situation cannot be monitored in real time, making the train vulnerable to unexpected events, which adversely affects the running safety of the train.

### SUMMARY

An objective of the present disclosure is to provide a train control method, a storage medium, a vehicle on-board controller, and a train, to resolve a problem of low efficiency and low safety of manually controlling running of a train when a communication failure occurs in the train.

To achieve the foregoing objective, a first aspect of the present disclosure provides a train control method. The method includes:
when a communication failure occurs in a target train, a target failure type of the communication failure occurring in the target train is determined;
a target control strategy of the target train is determined according to the target failure type and a preset correspondence between a failure type and a control strategy; and
running of the target train is controlled according to the target control strategy.

Optionally, that a target control strategy of the target train is determined according to the target failure type and a preset correspondence between a failure type and a control strategy includes:

when the target failure type represents that communication between the target train and an object controller is interrupted, communication between the target train and an automatic train supervision system is normal, and communication between the automatic train supervision system and the object controller is normal, it is determined that the target control strategy of the target train is a remote control strategy, the remote control strategy representing that the running of the target train is controlled according to a remote control instruction delivered by the automatic train supervision system; or

when the target failure type represents that communication between the target train and an object controller is interrupted and communication between the target train and an automatic train supervision system is interrupted, or when the target failure type represents that communication between the target train and an object controller is interrupted and communication between an automatic train supervision system and the object controller is interrupted, it is determined that the target control strategy of the target train is an autonomous control strategy, the autonomous control strategy representing that the running of the target train is controlled according to a preset running plan.

Optionally, that running of the target train is controlled according to the target control strategy includes:
when the target control strategy of the target train is the autonomous control strategy, an adjacent train of the target train is determined, a usage permission of the target train for a line resource is applied for based on communication between the target train and the adjacent train and communication between the adjacent train and the object controller, or communication between the adjacent train and the object controller through the automatic train supervision system, and the running of the target train is controlled according to an application result of the usage permission; or
a usage permission of the target train for a line resource is applied for based on near field communication between a near field communication module of the target train and a controller of the line resource, and the running of the target train is controlled according to an application result of the usage permission.

Optionally, a priority of the usage permission applied based on the near field communication is higher than a priority of the usage permission applied according to the object controller.

Optionally, that running of the target train is controlled according to the target control strategy includes:
when the target control strategy of the target train is the remote control strategy, a usage permission of the target train for a line resource is applied for based on the communication between the target train and the automatic train supervision system and the communication between the automatic train supervision system and the object controller; and
the running of the target train is controlled according to an application result of the usage permission.

Optionally, that running of the target train is controlled according to the target control strategy includes:
when the target control strategy of the target train is the remote control strategy, an authorized movement distance of the target train is determined according to a minimum distance between a limited running distance in the remote control instruction delivered by the automatic train supervision system and a runnable distance determined by a sensing positioning system of the target train; and
the running of the target train is controlled according to the authorized movement distance.

Optionally, the line resource includes a turnout, a position of the turnout includes a normal position, a reverse position, and a preset out-of-position, and a controller of the turnout is configured to: control, in response to the position of the turnout being at the normal position or the reverse position, the turnout to be locked, and move the turnout to the preset out-of-position when the turnout cannot be locked.

That the running of the target train is controlled according to an application result of the usage permission includes:
an application result of a usage permission for the turnout which is sent by the controller of the turnout is received, where the application result of the usage permission includes an availability permission and an unavailability permission, the availability permission represents that the position of the turnout is at a target position applied by the target train and the turnout is locked, and the unavailability permission represents that the position of the turnout is at a non-target position including the preset out-of-position; and
if the application result of the usage permission is the unavailability permission, the target train is controlled to stop running before the turnout.

Optionally, the controller of the turnout is specifically configured to move, when the position of the turnout is at a first position and the turnout cannot be locked, the position of the turnout to a second position and control the turnout to be locked, the first position being the normal position or the reverse position, and the second position being a position other than the first position in the normal position or the reverse position; and
if the turnout cannot be locked at the second position, move the position of the turnout to the preset out-of-position.

A second aspect of the present disclosure further provides a non-transitory computer-readable storage medium having a computer program stored therein. The program, when executed by a processor, implements steps of the method according to any one of the first aspect.

A third aspect of the present disclosure further provides a vehicle on-board controller, including:
a memory, having a computer program stored therein; and
a processor, configured to execute the computer program stored in the memory, to implement steps of the method according to any one of the first aspect.

A fourth aspect of the present disclosure further provides a train, including the vehicle on-board controller according to the third aspect.

Through the foregoing technical solutions, at least the following beneficial effects can be achieved:
When the communication failure occurs in the target train, the target failure type of the communication failure occurring in the target train is determined, the target control strategy of the target train is determined according to the target failure type and the preset correspondence between the failure type and the control strategy, and the running of the target train is finally controlled according to the target control strategy. According to the method, when a communication failure occurs in a train, a corresponding control strategy may be determined according to a failure type of the communication failure, and then running of the train is controlled according to the control strategy. In comparison with a manner of manually and remotely controlling the running of the train, efficiency is higher, and it is convenient to monitor the train's actual running situation in real time, to avoid unexpected events affecting running safety of the train, thereby improving the running safety of the train.

Other features and advantages of the present disclosure will be described in detail in the following detailed description.

### BRIEF DESCRIPTION OF THE DRAWINGS

The accompanying drawings are provided to further understand the present disclosure, and they constitute a part of the specification. The accompanying drawings, along with the specific implementations, are used to explain the present disclosure, and pose no limitation on the present disclosure. In the accompanying drawings:
FIG. 1 is a schematic flowchart of a train control method according to an embodiment of the present disclosure;
FIG. 2 is a schematic diagram of communication interaction of a train autonomous circumambulate system based on vehicle-to-vehicle communication according to an embodiment of the present disclosure;
FIG. 3 is a schematic diagram of a position of a turnout according to an embodiment of the present disclosure; and
FIG. 4 is a schematic diagram a vehicle on-board controller according to an embodiment of the present disclosure.

### DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

It should be noted that, all actions of obtaining signals, information, or data in the present disclosure are performed under the premise of complying with corresponding data protection regulations and policies of a country and authorization granted by an owner of a corresponding apparatus.

It should be understood that the steps described in the method implementations of the present disclosure may be performed in a different order and/or in parallel. In addition, the method implementation may include additional steps and/or omit performing shown steps. The scope of the present disclosure is not limited in this aspect. The term "include" and variants thereof used in this specification are open inclusion, that is, "include but not limited to". The term "based on" is "based at least in part on". The term "one embodiment" represents "at least one embodiment". The term "another embodiment" represents "at least one another embodiment". The term "some embodiments" represents "at least some embodiments". Related definitions of other terms are provided in the following description.

It should be noted that concepts such as "first" and "second" mentioned in the present disclosure are merely used to distinguish between different apparatuses, modules, or units, but are not used to limit an order or a mutual dependence of functions performed by the apparatuses, modules, or units. It should be noted that, modifications such as "one" and "multiple" mentioned in the present disclosure are illustrative rather than restrictive. A person skilled in the art should understand that, unless otherwise clearly indicated in the context, it should be understood as "one or more".

Currently, in a train autonomous circumambulate system based on vehicle-to-vehicle communication, a train generates a running task based on a current position of the train and a running plan that is delivered by an automatic train supervision system (ATS), autonomously calculates a requirement for a line resource, takes an opportunity to apply for a usage permission of the line resource from an object controller (OC, also referred to as a line resource management subsystem), locks and uses the line resource after the usage permission is obtained, and actively releases the resource in time after use. However, in the train autonomous circumambulate system based on vehicle-to-vehicle communication, when a train communication device fails and the train is consequently degraded, the train cannot apply for the usage permission of the line resource from the object controller. In this case, a running path of the degraded train is usually planned remotely and manually, and the line resource required for the running path is manually applied for, resulting in low efficiency. In addition, when the train is manually and remotely controlled, the train's actual running situation cannot be monitored in real time, making the train vulnerable to unexpected events, which adversely affects the running safety of the train. Moreover, a reaction speed of an entire rail transit system is consequently reduced, which affects operating efficiency of the rail transit system.

In view of this, the present disclosure provides a train control method, a storage medium, a vehicle on-board controller, and a train, to resolve the foregoing technical problems.

It should be noted that, the train control method provided in the embodiments of the present disclosure may be applied to an autonomous driving rail train or a manual driving rail train. In addition, an execution body of the method may be a train or an electronic device installed in a train, for example, a vehicle on-board controller (VOBC). This is not limited in the present disclosure. In the present disclosure, an embodiment is described by using a vehicle on-board controller as the execution body of the method.

The technical solutions of the present disclosure are described in detail in the following.

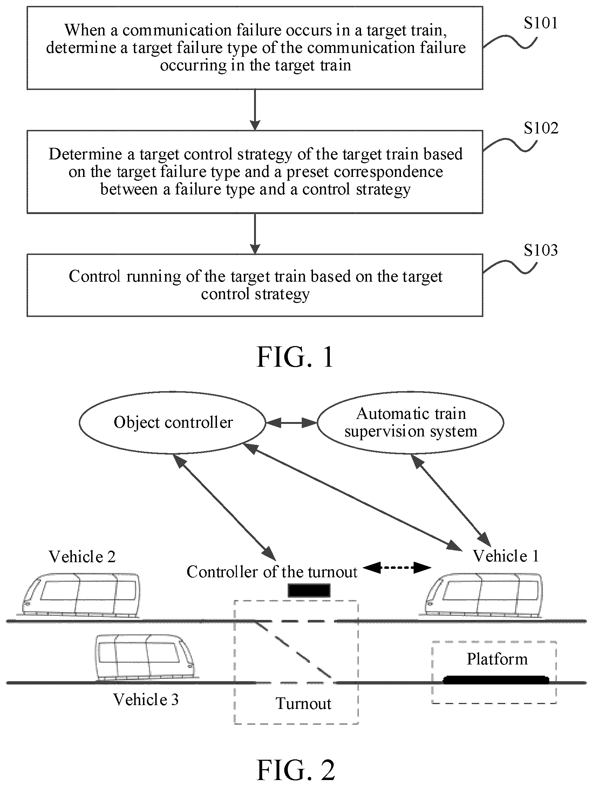

An embodiment of the present disclosure provides a train control method. Referring to FIG. 1, the method includes the following steps.

S101: When a communication failure occurs in a target train, a target failure type of the communication failure occurring in the target train is determined.

S102: A target control strategy of the target train is determined according to the target failure type and a preset correspondence between a failure type and a control strategy.

S103: Running of the target train is controlled according to the target control strategy.

According to the foregoing method, when a communication failure occurs in a train, a corresponding control strategy may be determined according to a failure type of the communication failure, and then running of the train is controlled according to the control strategy. In comparison with a manner of manually and remotely controlling the running of the train, efficiency is higher, and it is convenient to monitor the train's actual running situation in real time, to avoid unexpected events affecting running safety of the train, thereby improving the running safety of the train.

To enable a person skilled in the art better understand the train control method provided by the present disclosure, the foregoing steps are described in detail below by using examples.

In a possible implementation, that a target control strategy of the target train is determined according to the target failure type and a preset correspondence between a failure type and a control strategy may be: when the target failure type represents that communication between the target train and an object controller is interrupted, communication between the target train and an automatic train supervision system is normal, and communication between the automatic train supervision system and the object controller is normal, it is determined that the target control strategy of the target train is a remote control strategy, the remote control strategy representing that the running of the target train is controlled according to a remote control instruction delivered by the automatic train supervision system. Alternatively, when the target failure type represents that communication between the target train and an object controller is interrupted and communication between the target train and an automatic train supervision system is interrupted, or when the target failure type represents that communication between the target train and an object controller is interrupted and communication between an automatic train supervision system and the object controller is interrupted, it is determined that the target control strategy of the target train is an autonomous control strategy, the autonomous control strategy representing that the running of the target train is controlled according to a preset running plan.

It should be noted that, referring to FIG. 2, when the communication between the train and the object controller and the communication between the train and the automatic train supervision system are both normal, a vehicle on-board controller generates a planning task based on the current position of the train and a running plan that is delivered by the automatic train supervision system, autonomously calculates a requirement for a line resource, and takes an opportunity to apply for a usage permission of the line resource from the object controller. The object controller determines an application result of the usage permission, a controller of the line resource controls a state of the line resource according to the application result, and the vehicle on-board controller controls the running of the train according to the application result. The line resource includes a turnout, a track section, a platform, a turn-back track, and the like.

For example, when the communication between the target train and the object controller is interrupted, the communication between the target train and the automatic train supervision system is normal, and the communication between the automatic train supervision system and the object controller is normal, because the train cannot apply for the usage permission of the line resource from the object controller, but the communication between the train and the automatic train supervision system is normal, the automatic train supervision system may apply for the usage permission of the line resource from the object controller. Therefore, the running of the target train may be controlled according to the remote control instruction delivered by the automatic train supervision system. If the communication between the train and the object controller and the communication between the train and the automatic train supervision system are both interrupted, or the communication between the train and the object controller and the communication between the automatic train supervision system and the object controller are both interrupted, the running of the target train is controlled according to the preset running plan.

It should be noted that, in a case of normal communication, the running plan of the train is delivered by the automatic train supervision system to a controller or storage device related to the train, and an initial running plan is usually delivered before the train runs. In addition, during the running of the train, the automatic train supervision system adjusts the running plan in real time according to a line running status, a train running status, and the like, and redelivers the running plan. Therefore, the preset running plan is a latest version of a running plan received before the communication failure occurs in the train. The running plan includes information such as a running line and running time.

In a possible implementation, that running of the target train is controlled according to the target control strategy may include: when the target control strategy of the target train is the remote control strategy, a usage permission of the target train for a line resource is applied for based on the communication between the target train and the automatic train supervision system and the communication between the automatic train supervision system and the object controller, and then the running of the target train is controlled according to an application result of the usage permission.

For example, when the target control strategy of the target train is the remote control strategy, referring to FIG. 2, the train (for example, a vehicle 1) communicates with the automatic train supervision system, and the automatic train supervision system communicates with the object controller. Specifically, the target train communicates with the automatic train supervision system, the vehicle on-board controller obtains the running plan delivered by the automatic train supervision system, generates the running task according to the current position of the train, autonomously calculates the requirement for the line resource, and takes an opportunity to apply for the usage permission of the line resource from the automatic train supervision system. After receiving an application request of the usage permission, the automatic train supervision system communicates with the object controller. The object controller may determine the application result of the usage permission according to a use situation of the corresponding line resource, and feed back the application result to the train through the automatic train supervision system. Then, the vehicle on-board controller controls the running of the train according to the application result. For example, when the line resource is the track section, if the application result represents that the track section is available, the train is controlled to pass through the track section, otherwise the train is controlled to stop before the track section.

In addition, the automatic train supervision system may alternatively adjust the running plan of the train according to the application result. For example, when the application result represents that the track section is unavailable, a new running path is planned, and a new running plan is redelivered to the vehicle on-board controller, so that the vehicle on-board controller generates a running task again based on the new running plan.

For example, after receiving the application request of the usage permission, the automatic train supervision system may automatically communicate with the object controller, and request the object controller to perform a corresponding operation according to the application request. Alternatively, a train dispatcher may manually operate on an operation interface. This is not limited in the present disclosure. An example in which the line resource is a single turnout is used. The operation interface prompts that a normal position and a reverse position can be selected. The train dispatcher selects, according to the application request, a position at which the turnout is to be locked (the normal position or the reverse position). After receiving a corresponding single locking instruction, the object controller moves the turnout to a corresponding position and locks the turnout. If the turnout is already at an intended position delivered by using an interface instruction of the automatic train supervision system, the object controller directly sets the turnout to a locked status, to ensure normal running of the train.

Certainly, in another possible implementation, the train dispatcher may alternatively operate on the operation interface manually according to the running plan delivered to the train, to request, from the object controller, the usage permission of the line resource required for the running of the train, and feed back, after obtaining the application result of the corresponding usage permission, the application result to the train, so that the vehicle on-board controller controls the running of the target train according to the application result. This is not limited in the present disclosure.

In a possible implementation, that running of the target train is controlled according to the target control strategy may include: when the target control strategy of the target train is the remote control strategy, an authorized movement distance of the target train is determined according to a minimum distance between a limited running distance in the remote control instruction delivered by the automatic train supervision system and a runnable distance determined by a sensing positioning system of the target train, and the running of the target train is controlled according to the authorized movement distance.

For example, the train dispatcher may input the limited running distance of the target train on the operation interface of the automatic train supervision system according to a running status of the entire rail transit system, and then generate the remote control instruction and deliver the remote control instruction to the target train. The train dispatcher may adjust the limited running distance in real time according to the running status. In addition, the sensing positioning system of the train determines the runnable distance of the train based on a line condition such as an identified turnout or obstacle and under a requirement of a security protection of the train. Then, the minimum distance between the limited running distance and the runnable distance is used as the authorized movement distance of the target train, and finally, the vehicle on-board controller controls the running of the target train according to the authorized movement distance, to ensure safe running of the train.

In a possible implementation, that running of the target train is controlled according to the target control strategy may include: when the target control strategy of the target train is the autonomous control strategy, an adjacent train of the target train is determined, a usage permission of the target train for a line resource is applied for based on communication between the target train and the adjacent train and communication between the adjacent train and the object controller, or communication between the adjacent train and the object controller through the automatic train supervision system, and the running of the target train is controlled according to an application result of the usage permission. Alternatively, a usage permission of the target train for a line resource is applied for based on near field communication between a near field communication module of the target train and a controller of the line resource, and the running of the target train is controlled according to an application result of the usage permission.

For example, referring to FIG. 2, an example in which the vehicle 1 is the target train is used. When the target control strategy of the target train is the autonomous control strategy, a vehicle on-board controller of the vehicle 1 controls running of the vehicle 1 according to a preset running plan. If the vehicle 1 needs to apply for a corresponding line resource (for example, a turnout) during running, an adjacent train in a vehicle-to-vehicle communication range may be searched for. For example, if a vehicle 2 is the adjacent train, the vehicle 1 establishes vehicle-to-vehicle communication with the vehicle 2, and the vehicle 1 sends an application request for applying for a usage permission of the line resource to the vehicle 2. The vehicle 2 forwards the application request according to a communication status of the vehicle 2 after receiving the application request. For example, when communication between the vehicle 2 and the object controller is normal, the vehicle 2 directly forwards the application request to the object controller. If communication between the vehicle 2 and the object controller is abnormal, reference may be made to the foregoing embodiment in which a control strategy of the vehicle 1 is the remote control strategy. Details are not described herein again in the present disclosure. Finally, the vehicle on-board controller of the vehicle 1 controls the running of the vehicle 1 according to a fed back application result of the usage permission.

For example, a redundant near field communication module may be configured in the vehicle on-board controller, and a redundant near field communication module may also be arranged in the controller of the line resource. The near field communication module may be a module that supports near field communication, such as an NFC module or a Bluetooth module. This is not limited in the present disclosure. Referring to FIG. 2, an example in which the vehicle 1 is the target train is used. When the target control strategy of the target train is the autonomous control strategy, the vehicle 1 may perform near field communication with the controller of the line resource (for example, a controller of a turnout), and directly apply for the usage permission of the line resource from the controller of the line resource. The vehicle on-board controller of the vehicle 1 controls the running of the vehicle 1 according to a fed back application result of the usage permission.

It should be noted that a near field communication manner or an adjacent-train communication manner may be selected according to a requirement. Alternatively, a near field communication manner may be selected when an adjacent train cannot be found or vehicle-vehicle communication is abnormal, or an adjacent-train communication manner is used when an abnormality occurs in a near field communication manner. This is not limited in the present disclosure. In addition, the object controller may alternatively be configured with a redundant near field communication module. When a communication failure occurs between the object controller and the train, the near field communication manner is enabled for communication. This is not limited in the present disclosure.

In a possible implementation, a priority of the usage permission applied based on the near field communication is higher than a priority of the usage permission applied according to the object controller.

For example, the authorized movement distance of the train does not exceed that of a train running ahead under the limitation of the runnable distance determined by the sensing positioning system. Therefore, the train and the train running ahead do not simultaneously apply for a same line resource. In addition, the object controller allocates usage permissions of line resources of different trains in sequence according to a priority order of applying for the line resources by the different trains. When the communication between the object controller and the target train is interrupted, the object controller cannot learn the application request of the target train for the line resource, and a communication range of near field communication is much less than a communication range of network communication used by the object controller. Therefore, the priority of the usage permission applied based on the near field communication is set to be higher than the priority of the usage permission applied according to the object controller, to avoid a case that a following running train occupies the usage permission of the line resource in advance, and the target train consequently cannot use the line resource, or avoid a case that the object controller moves the turnout when the target train is using the turnout.

In a possible implementation, the line resource includes a turnout, and a position of the turnout includes a normal position, a reverse position, and a preset out-of-position. A controller of the turnout can control, in response to the position of the turnout being at the normal position or the reverse position, the turnout to be locked, and move the turnout to the preset out-of-position when the turnout cannot be locked. That the running of the target train is controlled according to an application result of the usage permission includes: an application result of a usage permission for the turnout which is sent by the controller of the turnout is received, where the application result of the usage permission includes an availability permission and an unavailability permission, the availability permission represents that the position of the turnout is at a target position applied by the target train and the turnout is locked, and the unavailability permission represents that the position of the turnout is at a non-target position including the preset out-of-position. If the application result of the usage permission is the unavailability permission, the target train is controlled to stop running before the turnout.

For example, the controller of the turnout is specifically configured to move, when the position of the turnout is at a first position and the turnout cannot be locked, the position of the turnout to a second position and control the turnout to be locked, the first position being the normal position or the reverse position, and the second position being a position other than the first position in the normal position and the reverse position; and if the turnout cannot be locked at the second position, move the position of the turnout to the preset out-of-position.

It should be noted that, in the related art, the turnout is usually in an unlocked status. The turnout is controlled to be locked when the train applies to use the turnout, and the turnout is controlled to be unlocked after use is completed. In the embodiments of the present disclosure, after the object controller is powered on or restarted, an operator performs a corresponding unlocking operation, for example, enters a password or a verification code to unlock a control region of the object controller, so that the object controller obtains control rights of all line resources in the control region. In addition, after the unlocking operation is performed, all track sections in the control region are set to an unlocked status, but the turnout in the control region is controlled to be locked. In addition, when the object controller operates the turnout according to an operation instruction delivered by the automatic train supervision system or an application instruction sent by the vehicle on-board controller, if a current position of the turnout is consistent with a position in the instruction, the object controller determines that the turnout does not need to be moved and controls the turnout to be locked, so that the turnout is locked if the turnout is in position. If the current position of the turnout is not consistent with the position in the instruction, the object controller controls the turnout to be locked after moving the turnout to the position in the instruction, so that the turnout is locked if the turnout is moved.

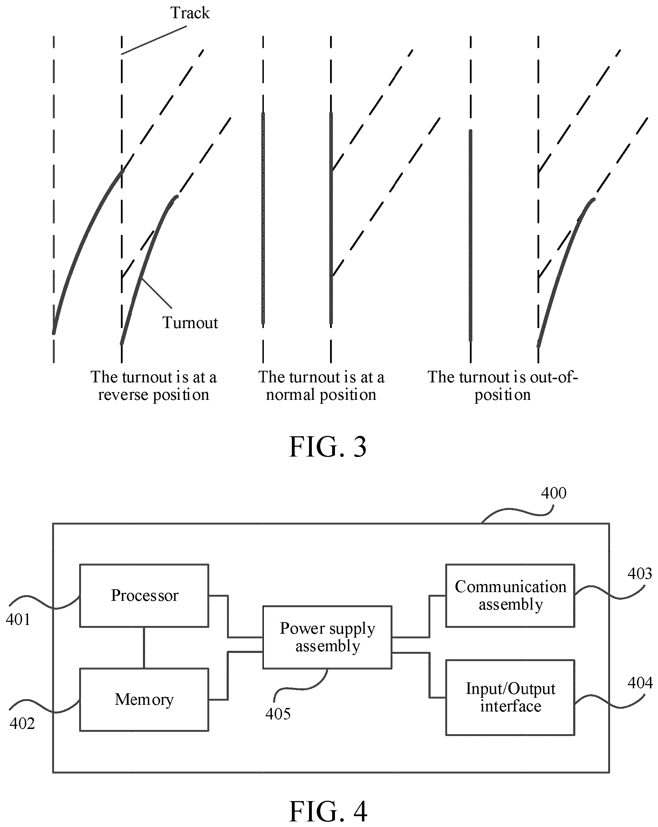

Further, if the object controller cannot lock the turnout due to some failure reasons after moving the turnout in position, for example, a failure occurs in a locking relay of the turnout, after it is further determined that the turnout cannot be locked, the object controller may move the turnout to the preset out-of-position. For example, when the object controller determines, through collection, that the turnout is in an unlocked status or the object controller cannot receive information about the locked status of the turnout, the object controller autonomously moves the turnout back to a position before moving, where either the normal position or the reverse position is supported (referring to FIG. 3). If the turnout still cannot be locked when the object controller moves the turnout to the position that is before a moving instruction of this time is executed, the object controller controls the turnout to move away from the normal position or the reverse position, that is, moves the turnout to the preset out-of-position (referring to FIG. 3). Alternatively, when the object controller controls the turnout to be locked when the turnout is in position, if the turnout cannot be locked, the object controller moves the turnout away from the current position and then lock the turnout. If the turnout still cannot be locked, the object controller moves the turnout to the preset out-of-position. Certainly, in another possible implementation, the object controller may perform an operation of moving and locking the turnout for multiple times. If the turnout cannot be locked, the object controller moves the turnout to the preset out-of-position, or may perform an operation of locking the turnout again after preset duration. If the turnout still cannot be locked, the object controller moves the turnout to the preset out-of-position, or the like. This is not limited in the present disclosure. In addition, in a case of multiple turnouts, the turnouts may be moved in sequence to multiple positions and locked to determine whether the turnouts need to be moved to the preset out-of-position.

It should be noted that an execution body of controlling the turnout may alternatively be the controller of the turnout, and the object controller delivers a corresponding instruction to the controller of the turnout. For details, reference may be made to the related art, and details are not described herein again in the present disclosure. When the target train applies for the usage permission of the turnout from the controller of the turnout through near field communication, the controller of the turnout directly controls the turnout to perform an operation such as moving or locking. In addition, regardless of whether the usage permission of the turnout is applied for by using the object controller or the usage permission of the turnout is directly applied for from the controller of the turnout, the application request needs to include a corresponding turnout position (the target position), so that the object controller or the controller of the turnout allocates the usage permission of the turnout according to the turnout position in the application request.

For example, because the turnout is normally in the locked status, when the target train requests the usage permission of the turnout from the object controller through the automatic train supervision system, and when the operator requests to control the turnout through the operation interface, the operator needs to first deliver an unlocking instruction for the turnout and then deliver a control instruction for the turnout, to further confirm that the turnout can respond to an instruction of the automatic train supervision system. In addition, a case that when a train with a communication failure uses the turnout, the controller of the turnout moves the turnout in response to a use request of another train with normal communication can be avoided, thereby ensuring safety when the train passes through the turnout.

For example, when the target train applies for the usage permission of the turnout from the controller of the turnout through near field communication, the controller of the turnout moves the turnout according to the target position applied by the target train. If the turnout can be moved to the target position and locked, a permission result that the turnout can be used is fed back to the target train. If the turnout is at the non-target position, for example, the turnout is occupied and cannot be moved to the target position, the turnout is moved to the target position but cannot be locked, and is moved to another position, or the turnout is moved to another position but still cannot be locked, and is moved to the preset out-of-position, a permission result that the turnout cannot be used is fed back to the target train. Further, when the target train can use the turnout, the target train is controlled to pass the turnout, or when the target train cannot use the turnout, the target train is controlled to stop running before the turnout.

It should be noted that, during the running of the train, a to-be-run line ahead, including the position of the turnout, may be detected by using the sensing positioning system. Devices in the sensing positioning system of the train include a lidar, a millimeter wave radar, a monocular camera, an inertial measurement unit, and a Beidou system. A positioning algorithm and an obstacle algorithm are fused with reference to AI. After a series of training such as data collection, data cleaning, data annotation, model training and generation, and model use is performed, the sensing positioning system may identify, according to different point cloud data information, whether the position of the turnout is at the normal position, the reverse position, or the out-of-position (as shown in FIG. 3). Therefore, during the running of the train, whether the position of the turnout satisfies a running requirement is further determined through the sensing positioning system. For example, when the sensing positioning system detects that the current position of the turnout matches a track path line required for running and is continuous, the sensing positioning system reports information to the vehicle on-board controller, and the vehicle on-board controller may control the train to run through the turnout. Alternatively, when the sensing positioning system detects that the current position of the turnout does not match a track path line required for running, the sensing positioning system reports information to the vehicle on-board controller, and the vehicle on-board controller may control the train to stop running before the turnout.

In addition, when the communication between the train and the object controller is normal, the position of the turnout may be detected by the sensing positioning system, or the position of the turnout fed back by the object controller may be received after the use request for the turnout is sent to the object controller. In addition, when it is determined that the position of the turnout is at the preset out-of-position, the train may autonomously switch the running path according to the running plan, or apply for a new running path to the automatic train supervision system. This is not limited in the present disclosure.

According to the foregoing method, when a communication failure occurs in a train, a corresponding control strategy may be determined according to a failure type of the communication failure, and then running of the train is controlled according to the control strategy. In comparison with a manner of manually and remotely controlling the running of the train, efficiency is higher. In addition, an actual situation of the running of the train is detected in real time by using the sensing positioning system of the train, to prevent unexpected events from affecting running safety of the train, thereby ensuring safe running of the train. In this way, autonomous running of the train is implemented when the communication failure occurs in the train, so that operating efficiency of the rail transit system is improved.

Based on the same inventive concept, an embodiment of the present disclosure further provides a non-transitory computer-readable storage medium, having a computer program stored therein. The program, when executed by a processor, implements steps of the foregoing train control method.

Based on the same inventive concept, an embodiment of the present disclosure further provides a vehicle on-board controller, including:
a memory, having a computer program stored therein; and
a processor, configured to execute the computer program in the memory, to implement steps of the foregoing train control method.

Based on the same inventive concept, an embodiment of the present disclosure further provides a train, including the foregoing vehicle on-board controller.

FIG. 4 is a block diagram of a vehicle on-board controller 400 according to an exemplary embodiment. Referring to FIG. 4, the vehicle on-board controller 400 includes one or more processors 401, and a memory 402 configured to store a computer program executable by the processor 401. The computer program stored in the memory 402 may include one or more modules, and each module corresponds to a group of instructions. In addition, the processor 401 may be configured to execute the computer program to perform the foregoing train control method.

In addition, the vehicle on-board controller 400 may further include a power supply assembly 405 and a communication assembly 403. The power supply assembly 405 may be configured to perform power supply management of the vehicle on-board controller 400, and the communication assembly 403 may be configured to implement communication, for example, wired or wireless communication, of the vehicle on-board controller 400. In addition, the vehicle on-board controller 400 may further include an input/output (I/O) interface 404. The vehicle on-board controller 400 may operate an operating system, for example, Windows ServerTM, Mac OS XTM, UnixTM, LinuxTM, and the like stored in the memory 402.

In another exemplary embodiment, a computer-readable storage medium including program instructions is further provided. The program instructions, when executed by a processor, implement steps of the foregoing train control method. For example, the non-transitory computer-readable storage medium may be the foregoing memory 402 including program instructions, and the foregoing program instructions may be performed by the processor 401 of the vehicle on-board controller 400 to complete the foregoing train control method.

In another exemplary embodiment, a computer program product is further provided. The computer program product includes a computer program executable by a programmable apparatus. The computer program includes code portions for performing the foregoing train control method when executed by the programmable apparatus.

The exemplary embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

In addition, it should be noted that, the specific technical features described in the foregoing specific implementations may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A train control method, comprising:
when a communication failure occurs in a target train, determining a target failure type of the communication failure occurring in the target train;
determining a target control strategy of the target train according to the target failure type and a preset correspondence between a failure type and a control strategy; and
controlling running of the target train according to the target control strategy.

2. The method according to claim 1, wherein determining the target control strategy of the target train according to the target failure type and the preset correspondence between the failure type and the control strategy comprises:
when the target failure type represents that communication between the target train and an object controller is interrupted, communication between the target train and an automatic train supervision system is normal, and communication between the automatic train supervision system and the object controller is normal, determining that the target control strategy of the target train is a remote control strategy, the remote control strategy representing that the running of the target train is controlled according to a remote control instruction delivered by the automatic train supervision system; or
when the target failure type represents that the communication between the target train and an object controller is interrupted and the communication between the target train and the automatic train supervision system is interrupted, or when the target failure type represents that the communication between the target train and an object controller is interrupted and the communication between the automatic train supervision system and the object controller is interrupted, determining that the target control strategy of the target train is an autonomous control strategy, the autonomous control strategy representing that the running of the target train is controlled according to a preset running plan.

3. The method according to claim 2, wherein controlling running of the target train according to the target control strategy comprises:
when the target control strategy of the target train is the autonomous control strategy, determining an adjacent train of the target train, applying for a usage permission of the target train for a line resource based on communication between the target train and the adjacent train and communication between the adjacent train and the object controller or communication between the adjacent train and the object controller through the automatic train supervision system, and controlling the running of the target train according to an application result of the usage permission; or
applying for the usage permission of the target train for the line resource based on near field communication between a near field communication module of the target train and a controller of the line resource, and controlling the running of the target train according to an application result of the usage permission.

4. The method according to claim 3, wherein a priority of the usage permission applied based on the near field communication is higher than a priority of the usage permission applied based on the object controller.

5. The method according to claim 2, wherein controlling running of the target train according to the target control strategy comprises:
when the target control strategy of the target train is the remote control strategy, applying for a usage permission of the target train for a line resource based on the communication between the target train and the automatic train supervision system and the communication between the automatic train supervision system and the object controller; and
controlling the running of the target train according to an application result of the usage permission.

6. The method according to claim 2, wherein controlling running of the target train according to the target control strategy comprises:
when the target control strategy of the target train is the remote control strategy, determining an authorized movement distance of the target train according to a minimum distance between a limited running distance in the remote control instruction delivered by the automatic train supervision system and a runnable distance determined by a sensing positioning system of the target train; and
controlling the running of the target train according to the authorized movement distance.

7. The method according to claim 3 or 5, wherein the line resource comprises a turnout, a position of the turnout comprises a normal position, a reverse position, and a preset out-of-position, and a controller of the turnout is configured to: control, in response to the position of the turnout being at the normal position or the reverse position, the turnout to be locked, and move the turnout to the preset out-of-position when the turnout cannot be locked; and
controlling the running of the target train according to the application result of the usage permission comprises:
receiving the application result of a usage permission for the turnout which is sent by the controller of the turnout, wherein the application result of the usage permission comprises an availability permission and an unavailability permission, the availability permission represents that the position of the turnout is at a target position applied by the target train and the turnout is locked, and the unavailability permission represents that the position of the turnout is at a non-target position comprising the preset out-of-position; and
controlling the target train to stop running before the turnout if the application result of the usage permission is the unavailability permission.

8. The method according to claim 7, wherein the controller of the turnout is specifically configured to move, when the position of the turnout is at a first position and the turnout cannot be locked, the position of the turnout to a second position and control the turnout to be locked, the first position being the normal position or the reverse position, and the second position being a position other than the first position in the normal position or the reverse position; and
if the turnout cannot be locked at the second position, move the position of the turnout to the preset out-of-position.

9. A non-transitory computer-readable storage medium, having a computer program stored therein, wherein the program, when executed by a processor, implements steps of the method according any one of claims 1 to 8.

10. A vehicle on-board controller (400), comprising:
a memory (402), having a computer program stored therein; and
a processor (401), configured to execute the computer program in the memory (402), to implement steps of the method according to any one of claims 1 to 8.

11. A train, comprising the vehicle on-board controller (400) according to claim 10.
